# EUROPÄISCHE PATENTSCHRIFT

(11) **EP 3 630 536 B1**
(45) Veröffentlichungstag und Bekanntmachung des Hinweises auf die Patenterteilung: **29.12.2021**
(21) Anmeldenummer: 18725196.2
(22) Anmeldetag: 16.05.2018
(51) Int. Cl.: B60L 15/00

(54) **VERFAHREN UND VORRICHTUNG ZUR ENTLADUNG EINES HOCHVOLT-ZWISCHENKREISES EINES FAHRZEUGES MIT EINER ENTLADESCHALTUNG**
METHOD AND DEVICE FOR DISCHARGING A HIGH-VOLTAGE INTERMEDIATE CIRCUIT OF A VEHICLE WITH A DISCHARGE CIRCUIT
DISPOSITIF ET PROCÉDÉ SERVANT À DÉCHARGER UN CIRCUIT INTERMÉDIAIRE HAUTE TENSION D'UN VÉHICULE AU MOYEN D'UN CIRCUIT DE DÉCHARGE

(30) Priorität: 31.05.2017 DE 102017209106
(43) Veröffentlichungstag der Anmeldung: 08.04.2020
(73) Patentinhaber: Robert Bosch GmbH, 70442 Stuttgart (DE)
(72) Erfinder: GROSSMANN, Ekard, 70569 Stuttgart (DE)
(86) Internationale Anmeldenummer: PCT/EP2018/062692
(87) Internationale Veröffentlichungsnummer: WO 2018/219644

(56) Entgegenhaltungen:
- EP-A1- 2 284 982
- DE-A1-102009 055 053

## Beschreibung

Die Erfindung betrifft ein Verfahren und eine Vorrichtung zur Entladung eines Hochvolt-Zwischenkreises eines Fahrzeuges mit einer Entladeschaltung. Ferner betrifft die Erfindung einen Antriebsstrang mit einer entsprechenden Vorrichtung und ein Fahrzeug mit einem Antriebsstrang sowie ein Computerprogramm und ein maschinenlesbares Speichermedium.

### Stand der Technik

Aus der WO 2009/106187 A1, der DE 10 2009 055053 A1 und der EP 2 284 982 A1 ist jeweils ein Verfahren und eine Vorrichtung zum Entladen eines Hochspannungsnetzes bekannt. Bei herkömmlichen Fahrzeugen beträgt die Spannung im Bordnetz ungefähr 14 Volt. Bei Hybridfahrzeugen oder Fahrzeugen mit Elektroantrieb kommen Spannungen im Traktionsnetz zum Einsatz, die mehrere 100 Volt betragen können. Elektrische Spannungen, die größer als 60 Volt sind, werden als Hochspannung bezeichnet. Aus Gründen der Sicherheit müssen Hochspannungsnetze, insbesondere Bordnetze oder Traktionsnetze, abschaltbar sein und entladen werden können. Bekannte Hochspannungsnetze umfassen zu diesem Zweck eine aktive Entladevorrichtung. Diese Vorrichtung besteht in der Regel aus einem zweipoligen Hauptschalter zum Abtrennen der Batterie vom übrigen Netz sowie einem schaltbaren Widerstand, über den die Ladung bei Bedarf abgebaut wird. Alternativ kann auch eine passive Entladevorrichtung zum Einsatz kommen. Diese Vorrichtung besteht in der Regel aus mindestens einem Widerstand, der parallel zum Energiespeicher und zum Hochspannungsnetz geschaltet ist. Derartige passive Entladeschaltungen sind dazu eingerichtet eine im Hochspannungsnetz befindliche Zwischenkreiskapazität, insbesondere einen sogenannten Zwischenkreiskondensator, innerhalb einer vorgegebenen Zeit, meist 120 Sekunden, unabhängig von einer anfänglich auftretenden Spannung auf eine Spannung kleiner als 60 Volt (Berührsicherheit) zu entladen. Es besteht das Bedürfnis alternative Entladeverfahren und Vorrichtungen für Hochspannungsnetze von Fahrzeugen bereitzustellen.

### Offenbarung der Erfindung

Die Erfindung umfasst eine Verfahren und eine Vorrichtung die in den Ansprüchen definiert werden.

So wird ein Verfahren zur Entladung eines Hochvolt-Zwischenkreises mit einer Entladeschaltung bereitgestellt, wobei der Hochvolt-Zwischenkreis einen Zwischenkreiskondensator umfasst. Das Verfahren umfasst die Schritte:
Ermitteln der Spannung am Hochvolt-Zwischenkreis;
Ansteuern der Entladeschaltung in Abhängigkeit der ermittelten Spannung.

Es wird ein Verfahren zur Entladung eines Hochvolt-Zwischenkreises eines Fahrzeugs mit einer Entladeschaltung bereitgestellt. Der Hochvolt-Zwischenkreis umfasst einen Zwischenkreiskondensator, welcher beispielsweise für den Betrieb einer elektrischen Maschine hochvoltseitig zwischen einen Pulswechselrichter und eine Hochvoltbatterie zur Glättung der beim Betrieb des Pulswechselrichters entstehenden Strom- und Spannungsspitzen geschaltet wird. Im Rahmen des Verfahrens wird, insbesondere zunächst, die Spannung am Hochvolt-Zwischenkreis ermittelt. Hierzu wird eine Spannungsmessung durchgeführt, wobei die Spannung an Potentialen des Hochvolt-Zwischenkreises gemessen wird, die galvanisch mit den Anschlüssen des Zwischenkreiskondensators verbunden sind. In Abhängigkeit dieser ermittelten Spannung wird die Entladeschaltung angesteuert. Vorteilhaft wird ein Verfahren zur Entladung eines Hochvolt-Zwischenkreises eines Fahrzeugs bereitgestellt.

In einem weiter Schritt des erfindungsgemäßen Verfahrens wird ein Betriebsspannungsbereich mit einem oberen Betriebsspannungswert und einem unteren Betriebsspannungswert des Hochvolt-Zwischenkreises vorgegeben. Das Ansteuern der Entladeschaltung umfasst ein Minimieren des Stroms durch die Entladeschaltung, falls die ermittelte Spannung des Hochvolt-Zwischenkreises kleiner als der obere Betriebsspannungswert und größer als der untere Betriebsspannungswert des Hochvolt-Zwischenkreises ist.

Zur Ansteuerung der Entladeschaltung in Abhängigkeit der ermittelten Spannung wird ein Betriebsspannungsbereich definiert, welcher mittels einem oberen Betriebsspannungswert und einem unteren Betriebsspannungswert des Hochvolt-Zwischenkreises vorgegeben wird. Die ermittelte Spannung wird mit dem oberen Betriebsspannungswert und dem unteren Betriebsspannungswert des Hochvolt-Zwischenkreises verglichen. Falls die ermittelte Spannung des Hochvolt-Zwischenkreises innerhalb des Betriebsspannungsbereiches liegt, also kleiner als der obere Betriebsspannungswert und größer als der untere Betriebsspannungswert ist, so wird der Strom durch die Entladeschaltung minimiert. Insbesondere gleichbedeutend zu dem Minimieren des Stroms durch die Entladeschaltung ist in diesem Zusammenhang ein Vermeiden eines Stroms durch die Entladeschaltung, beispielsweise durch galvanisches Trennen der Entladeschaltung von dem Hochvolt-Zwischenkreis, oder das Einstellen eines möglichst geringen Stroms durch die Entladeschaltung, beispielsweise aufgrund parasitärer Verluste, zu verstehen. Vorteilhaft wird ein effizientes Verfahren zur Entladung eines Hochvolt-Zwischenkreises eines Fahrzeugs bereitgestellt. Solange die Spannung des Hochvolt-Zwischenkreises innerhalb des Betriebsspannungsbereiches liegt, soll keine Entladung stattfinden. Innerhalb dieses Bereiches wird die Verlustleistung der Entladeschaltung minimiert.

In einer anderen Ausgestaltung der Erfindung umfasst das Ansteuern der Entladeschaltung ein Erhöhen des Stroms durch die Entladeschaltung, falls die ermittelte Spannung des Hochvolt-Zwischenkreises größer als der obere Betriebsspannungswert oder kleiner als der untere Betriebsspannungswert des Hochvolt-Zwischenkreises ist.

Die ermittelte Spannung wird mit dem oberen Betriebsspannungswert und dem unteren Betriebsspannungswert des Hochvolt-Zwischenkreises verglichen. Wenn die ermittelte Spannung außerhalb des Betriebsspannungsbereiches liegt, also die ermittelte Spannung des Hochvolt-Zwischenkreises größer als der obere Betriebsspannungswert oder kleiner als der untere Betriebsspannungswert ist, so wird der Strom durch die Entladeschaltung erhöht. Insbesondere gleichbedeutend zu dem Erhöhen des Stroms durch die Entladeschaltung ist in diesem Zusammenhang ein Maximieren des Stroms durch die Entladeschaltung oder ein Einstellen eines hohen Entladestroms zu verstehen. Dies erfolgt beispielsweise mittels Einschalten zusätzlicher Verbraucher, welche hierzu mit dem Hochvolt-Zwischenkreis galvanisch verbunden werden. Dadurch stellt sich ein Entladestrom ein, der sehr hoch oder signifikant größer ist als der minimierte Strom durch die Entladeschaltung, wenn die ermittelte Spannung des Hochvolt-Zwischenkreises innerhalb des Betriebsspannungsbereiches liegt. Vorteilhaft wird eine effiziente Entladeschaltung bereitgestellt, welche insbesondere den Entladestrom erhöht oder einen hohen Entladestrom einstellt, falls die ermittelte Spannung außerhalb des Betriebsspannungsbereiches liegt.

In einer anderen Ausgestaltung der Erfindung umfasst das Ansteuern der Entladeschaltung ein Erhöhen des Stroms durch die Entladeschaltung umgekehrt proportional zur sinkenden ermittelten Spannung des Hochvolt-Zwischenkreises.

Es wird eine Ansteuerung der Entladeschaltung bereitgestellt, bei der der Strom durch die Entladeschaltung umgekehrt proportional zur sinkenden ermittelten Spannung des Hochvolt-Zwischenkreises erhöht wird. Vorteilhaft wird somit ein Verfahren zur Entladung bereitgestellt, welches den Hochvolt-Zwischenkreis mit einer konstanten Leistung entlädt. So wird eine vorgebbare, beispielsweise maximale, Entladeleistung der Entladeschaltung nicht überschritten und gleichzeitig die Dauer des Entladungsvorgangs minimiert.

In einer anderen Ausgestaltung der Erfindung wird ein Stromgrenzwert des Stroms durch die Entladeschaltung vorgegeben. Das Ansteuern der Entladeschaltung umfasst ein Begrenzen des Stroms durch die Entladeschaltung, falls der Strom durch die Entladeschaltung den Stromgrenzwert überschreitet.

Um einer Überlastung der Entladeschaltung vorzubeugen, wird ein Stromgrenzwert des Stroms durch die Entladeschaltung vorgegeben. Der Strom durch die Entladeschaltung wird ermittelt und mit dem Stromgrenzwert verglichen. Falls der Strom durch die Entladeschaltung diesen Stromgrenzwert überschreitet, so wird der Strom durch die Entladeschaltung begrenzt, beispielsweise auf den Wert des Stromgrenzwertes. Vorteilhaft wird ein Verfahren bereitgestellt, welches eine Überlastung der Entladeschaltung verhindert.

In einer anderen Ausgestaltung der Erfindung wird ein Berührspannungswert des Hochvolt-Zwischenkreises vorgegeben. Das Ansteuern der Entladeschaltung umfasst ein Reduzieren des Stroms durch die Entladeschaltung, falls die ermittelte Spannung kleiner als der Berührungsspannungswert des Hochvolt-Zwischenkreises ist.

Für das Verfahren wird ein Berührspannungswert des Hochvolt-Zwischenkreises vorgeben, insbesondere beträgt der Berührspannungswert 60 Volt. Die ermittelte Spannung wird mit dem Berührspannungswert verglichen. Falls die ermittelte Spannung kleiner als der Berührspannungswert des Hochvolt-Zwischenkreises ist, umfasst das Ansteuern der Entladeschaltung ein Reduzieren des Stroms durch die Entladeschaltung. Vorteilhaft wird ein effizientes Verfahren zur Entladung eines Hochvolt-Zwischenkreises bereitgestellt, bei dem der Strom durch die Entladeschaltung minimiert wird, falls eine Entladung nicht notwendig ist, da die Spannung bereits unterhalb des Berührspannungswertes liegt.

Ferner betrifft die Erfindung ein Computerprogramm, das eingerichtet ist, die bisher beschriebenen Verfahren auszuführen.

Ferner betrifft die Erfindung ein maschinenlesbares Speichermedium, auf dem das beschriebene Computerprogramm gespeichert ist.

Ferner betrifft die Erfindung eine Vorrichtung zur Entladung eines Hochvolt-Zwischenkreises eines Fahrzeugs mit einer Entladeschaltung, wobei der Hochvolt-Zwischenkreis einen Zwischenkreiskondensator umfasst; wobei die Vorrichtung Mittel umfasst, eine Spannung am Hochvolt-Zwischenkreis zu ermitteln, und die Entladeschaltung in Abhängigkeit der ermittelten Spannung anzusteuern.

Dabei wird in der Vorrichtung ein Betriebsspannungsbereich mit einem oberen Betriebsspannungswert und einem unteren Betriebsspannungswert des Hochvolt-Zwischenkreises vorgegeben und der Strom durch die Entladeschaltung minimiert, falls die ermittelte Spannung des Hochvolt-Zwischenkreises kleiner als der obere Betriebsspannungswert und größer als der untere Betriebsspannungswert des Hochvolt-Zwischenkreises ist.

Es wird eine Vorrichtung zur Entladung eines Hochvolt-Zwischenkreises mit einer Entladeschaltung bereitgestellt. Der Hochvolt-Zwischenkreis umfasst einen Zwischenkreiskondensator. Die Vorrichtung umfasst, insbesondere erste, Mittel, welche eine Ermittlung der Spannung am Hochvolt-Zwischenkreis also insbesondere an Potentialen des Hochvolt-Zwischenkreises, die galvanisch mit den Anschlüssen des Zwischenkreiskondensators verbunden sind, ermöglicht. Weiter umfasst die Vorrichtung, insbesondere zweite, Mittel, welche eine Ansteuerung der Entladeschaltung in Abhängigkeit der ermittelten Spannung ermöglichen.

In einer anderen Ausgestaltung der Erfindung umfasst die Entladeschaltung einen Linearregler, Schaltregler oder DC/DC-Wandler.

Es wird eine Entladeschaltung mit einem Linearregler, Schaltregler oder DC/DC-Wandler bereitgestellt. Vorteilhaft wird eine Möglichkeit für die Umsetzung der Entladeschaltung bereitgestellt.

In einer anderen Ausgestaltung der Erfindung umfasst die Entladeschaltung einen schaltbaren Verbraucher, insbesondere einen Lastwiderstand.

Vorteilhaft wird eine weitere Möglichkeit zur Umsetzung der Entladeschaltung bereitgestellt.

Ferner betrifft die Erfindung einen Antriebsstrang mit einer Vorrichtung und einer Leistungselektronik und/oder insbesondere mit einer Hochvoltbatterie und/oder einem elektrischen Antrieb.

Ein derartiger Antriebsstrang dient beispielweise dem Antrieb eines elektrischen Fahrzeugs. Mittels des Verfahrens und der Vorrichtung wird ein sicherer Betrieb des Antriebsstrangs ermöglicht.

Ferner betrifft die Erfindung ein Fahrzeug, mit einer beschriebenen Vorrichtung. Vorteilhaft wird somit ein Fahrzeug bereitgestellt, welches eine Vorrichtung umfasst, mit der eine effiziente Entladung eines Hochvolt-Zwischenkreises erfolgen kann.

Es versteht sich, dass die Merkmale, Eigenschaften und Vorteile des erfindungsgemäßen Verfahrens entsprechend auf die Vorrichtung bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Darstellung eines Antriebsstrangs mit einer Vorrichtung zur Entladung eines Hochvolt-Zwischenkreises eines Fahrzeugs,
Figur 2
   ein schematisch dargestelltes Fahrzeug mit einem Antriebsstrang,
Figur 3
   ein schematisch dargestelltes Ablaufdiagramm für ein Verfahren zur Entladung eines Hochvolt-Zwischenkreises eines Fahrzeugs,
Figur 4
   ein schematisch dargestelltes Spannungs-Zeit-Diagramm

### Ausführungsformen der Erfindung

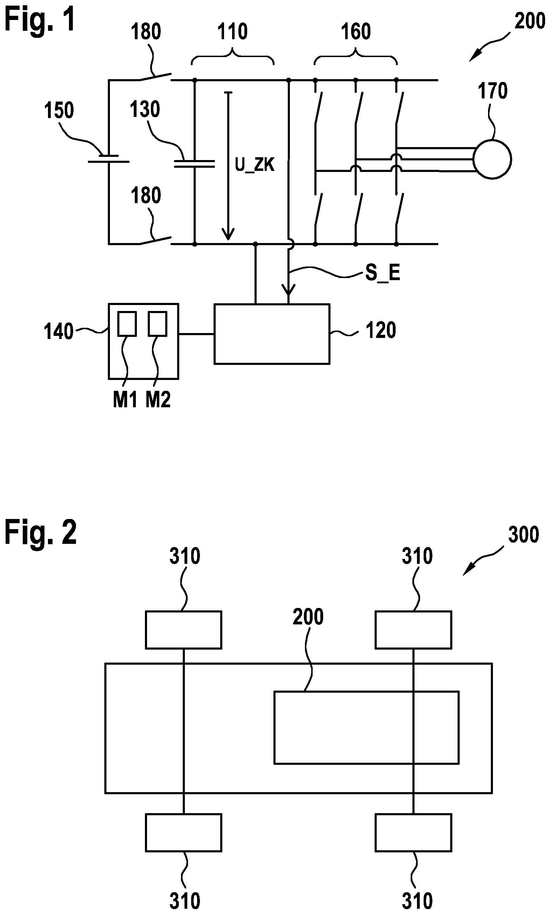

Die Figur 1 zeigt beispielhaft einen elektrischen Antriebsstrang 200 mit einer Vorrichtung 140 zur Ansteuerung einer Entladeschaltung 120 zur Entladung eines Hochvolt-Zwischenkreises 110. Der Hochvolt-Zwischenkreis umfasst einen Zwischenkreiskondensator 130, an welchem die Zwischenkreisspannung U_ZK anliegt. Der Antriebsstrang 200 umfasst insbesondere eine Hochvoltbatterie 150, welche mittels mindestens einem Schalter 180 an den Hochvolt-Zwischenkreis 110 anschließbar bzw. davon trennbar ist. Weiter umfasst der Antriebsstrang 200 insbesondere einen Pulswechselrichter 160, der in der Figur 1 schematisch als B6-Brücke dargestellt ist. Weiter umfasst der Antriebsstrang insbesondere eine elektrische Maschine 170 welche mit der Ausgangsspannung des Pulswechselrichters 160 gespeist wird. Die Vorrichtung 140 umfasst ein erstes Mittel M1 zur Ermittlung der Spannung U_ZK am Hochvolt-Zwischenkreis, insbesondere der Zwischenkreisspannung und ein zweites Mittel M2 zur Ansteuerung der Entladeschaltung 120. Die Spannungsmessung am Zwischenkreis 110 erfolgt mittels bekannten Spannungsmessverfahren und Vorrichtungen, welche als Ergebnis ein der ermittelten Spannung U_ZK entsprechendes Signal an die Vorrichtung 140 übertragen. Die Entladeschaltung 120 ist galvanisch mit den beiden Anschlüssen des Zwischenkreiskondensators 130 verbunden und ermöglicht die Entladung des Hochvolt-Zwischenkreises 110. In Figur 1 ist der Entladestrom S_E als fließender Strom durch die Entladeschaltung 120 dargestellt.

Figur 2 zeigt ein schematisch dargestelltes Fahrzeug 300 mit einem Antriebsstrang 200. Die Darstellung zeigt beispielhaft ein Fahrzeug mit vier Rädern 310, wobei die Erfindung gleichermaßen in beliebigen Fahrzeugen mit einer beliebigen Anzahl an Rädern zu Lande, zu Wasser und in der Luft einsetzbar ist.

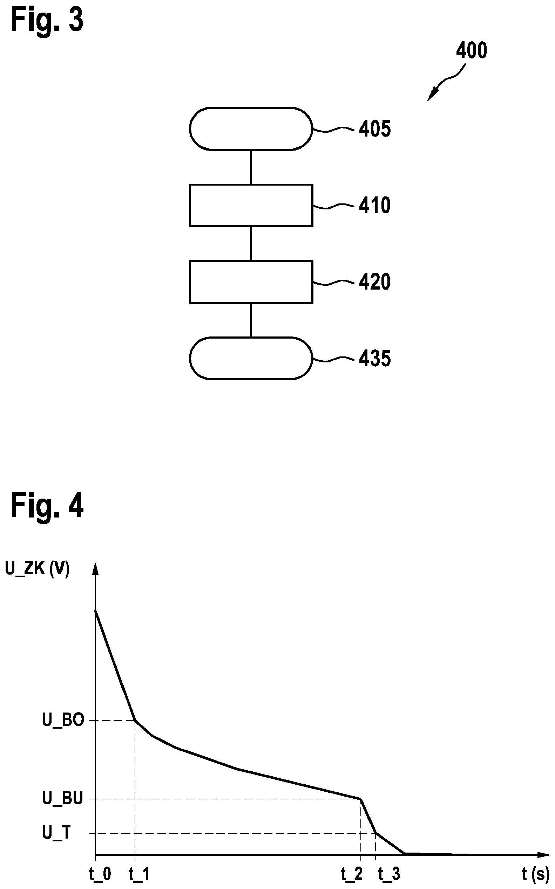

Die Figur 3 zeigt einen schematischen Ablauf eines Verfahrens 400 zur Entladung eines Hochvolt-Zwischenkreises 110 mit einer Entladeschaltung 120. Mit Schritt 405 beginnt das Verfahren. In Schritt 410 wird die Spannung U_ZK am Hochvolt-Zwischenkreis 110 ermittelt. In Schritt 420 wird die Entladeschaltung in Abhängigkeit der ermittelten Spannung U_ZK angesteuert. Mit Schritt 435 endet das Verfahren.

Die Figur 4 zeigt ein Diagramm, bei dem die Spannung am Hochvolt-Zwischenkreis U_ZK(V) über der Zeit t(s) aufgetragen ist. Zum Zeitpunkt t_0 liegt die Spannung U_ZK oberhalb des Betriebsspannungsbereiches U_B, der durch den oberen Betriebsspannungswert U_BO und den unteren Betriebsspannungswert U_BU begrenzt ist. Da die Spannung U_ZK zum Zeitpunkt t_0 oberhalb des oberen Betriebsspannungswert U_BO liegt, steuert die Vorrichtung 140 in Abhängigkeit der ermittelten Spannung U_ZK die Entladeschaltung 120 derart an, dass der Entladestrom S_E erhöht wird, bis zum Zeitpunkt t_1 die Spannung U_ZK den oberen Betriebsspannungswert U_BO unterschreitet. Anschließend minimiert die Vorrichtung 140 den Entladestrom S_E durch die Entladeschaltung 120 solange die Spannung U_ZK den oberen Betriebsspannungswert U_BO unterschreitet und den unteren Betriebsspannungswert U_BU überschreitet. Falls die Spannung U_ZK, wie in dem Diagramm ab dem Zeitpunkt t_2 dargestellt, den unteren Betriebsspannungswert U_BU unterschreitet, erhöht die Vorrichtung 140 den Entladestrom S_E durch die Entladeschaltung 120 solange die Spannung U_ZK den Berührspannungswert U_T nicht unterschreitet. Falls die Spannung U_ZK, wie in dem Diagramm ab dem Zeitpunkt t_3 dargestellt, den Berührspannungswert U_T unterschreitet, minimiert die Vorrichtung 140 den Entladestrom S_E durch die Entladeschaltung. Wenn dem Hochvolt-Zwischenkreis keine neue Energie zugeführt wird, beispielsweise durch Ankopplung einer Batterie über die Schalter 180 oder durch Induktion einer drehenden elektrischen Maschine 170 über den Pulswechselrichter 160, so sinkt die Spannung U_ZK stetig weiter aufgrund der parasitären Widerstände der Bauteile des Hochvolt-Zwischenkreises. Vorteilhafterweise wird das Verfahren insbesondere zyklisch durchgeführt, sodass die Schritte 410, also die Ermittlung der Spannung U_ZK und der Schritt 420 zur Ansteuerung der Entladeschaltung 120 in Abhängigkeit der ermittelten Spannung U_ZK regelmäßig, insbesondere kontinuierlich, durchgeführt werden. Folglich wird die Entladeschaltung 120 insbesondere regelmäßig oder kontinuierlich angesteuert, insbesondere mindestens teilweise aktiviert, deaktiviert oder deren Leitungsaufnahme zur Einstellung des Entladestroms S_E reguliert.

## Patentansprüche

1. Verfahren (400) zur Entladung eines Hochvolt-Zwischenkreises (110) mit einer Entladeschaltung (120),
wobei der Hochvolt-Zwischenkreis (110) einen Zwischenkreiskondensator (130) umfasst;
mit den Schritten:
Ermitteln (410) der Spannung (U_ZK) am Hochvolt-Zwischenkreis (110);
Ansteuern (420) der Entladeschaltung (120) in Abhängigkeit der ermittelten Spannung (U_ZK),
**dadurch gekennzeichnet, dass**
ein Betriebsspannungsbereich (U_B) mit einem oberen Betriebsspannungswert (U_BO) und einem unteren Betriebsspannungswert (U_BU) des Hochvolt-Zwischenkreises (110) vorgegeben wird,
wobei das Ansteuern (420) der Entladeschaltung (120) ein Minimieren des Stroms (S_E) durch die Entladeschaltung (120) umfasst, falls die ermittelte Spannung (U_ZK) des Hochvolt-Zwischenkreises (110) kleiner als der obere Betriebsspannungswert (U_BO) und größer als der untere Betriebsspannungswert (U_BU) des Hochvolt-Zwischenkreises (110) ist.

2. Verfahren (400) nach Anspruch 1,
wobei das Ansteuern (420) der Entladeschaltung (120) ein Erhöhen des Stroms (S_E) durch die Entladeschaltung (120) umfasst, falls die ermittelte Spannung (U_ZK) des Hochvolt-Zwischenkreises größer als der obere Betriebsspannungswert (U_BO) oder kleiner als der untere Betriebsspannungswert (U_BU) des Hochvolt-Zwischenkreises (110) ist.

3. Verfahren (400) nach Anspruch 2,
wobei das Ansteuern (420) der Entladeschaltung (120) ein Erhöhen des Stroms (S_E) durch die Entladeschaltung (120) umgekehrt proportional zur sinkenden ermittelten Spannung (U_ZK) des Hochvolt-Zwischenkreises (110) umfasst.

4. Verfahren (400) nach einem der vorhergehenden Ansprüche,
wobei ein Stromgrenzwert (S_G) des Stroms (S_E) durch die Entladeschaltung (120) vorgegeben wird,
wobei das Ansteuern (420) der Entladeschaltung (120) ein Begrenzen des Stroms (S_E) durch die Entladeschaltung (120) umfasst, falls der Strom (S_E) durch die Entladeschaltung (120) den Stromgrenzwert (S_G) überschreitet.

5. Verfahren (400) nach einem der vorhergehenden Ansprüche,
wobei ein Berührspannungswert (U_T) des Hochvolt-Zwischenkreises (110) vorgegeben wird,
wobei das Ansteuern (420) der Entladeschaltung (120) ein Reduzieren des Stroms (S_E) durch die Entladeschaltung (120) umfasst, falls die ermittelte Spannung (U_ZK) kleiner als der Berührspannungswert (U_T) des Hochvolt-Zwischenkreises (110) ist.

6. Computerprogramm, das eingerichtet ist, das Verfahren (400) nach einem der Ansprüche 1-5 auszuführen.

7. Maschinenlesbares Speichermedium, auf dem das Computerprogramm nach Anspruch 6 gespeichert ist.

8. Vorrichtung (140) zur Entladung eines Hochvolt-Zwischenkreises (110) mit einer Entladeschaltung (120),
wobei der Hochvolt-Zwischenkreis (110) einen Zwischenkreiskondensator (130) umfasst;
wobei die Vorrichtung (140) Mittel (M) umfasst,
eine Spannung (U_ZK) am Hochvolt-Zwischenkreis (110) zu ermitteln und
die Entladeschaltung (120) in Abhängigkeit der ermittelten Spannung (U_ZK) anzusteuern
**dadurch gekennzeichnet, dass**
ein Betriebsspannungsbereich (U_B) mit einem oberen Betriebsspannungswert (U_BO) und einem unteren Betriebsspannungswert (U_BU) des Hochvolt-Zwischenkreises (110) vorgegeben wird,
wobei das Ansteuern (420) der Entladeschaltung (120) ein Minimieren des Stroms (S_E) durch die Entladeschaltung (120) umfasst, falls die ermittelte Spannung (U_ZK) des Hochvolt-Zwischenkreises (110) kleiner als der obere Betriebsspannungswert (U_BO) und größer als der untere Betriebsspannungswert (U_BU) des Hochvolt-Zwischenkreises (110) ist.

9. Vorrichtung (140) nach Anspruch 8,
wobei die Entladeschaltung (120) einen Linearregler, Schaltregler oder DC/DC-Wandler umfasst.

10. Vorrichtung (140) nach Anspruch 8,
wobei die Entladeschaltung (120) einen schaltbaren Verbraucher, insbesondere einen Lastwiderstand, umfasst.

11. Antriebsstrang (200) mit einer Vorrichtung (140) gemäß einem der Ansprüche 8 bis 10.

12. Fahrzeug (300) mit einem Antriebsstrang (200) nach Anspruch 11.

## Claims

1. Method (400) for discharging a high-voltage intermediate circuit (110) with a discharge circuit (120),
wherein the high-voltage intermediate circuit (110) comprises an intermediate circuit capacitor (130);
having the steps of:
determining (410) the voltage (U_ZK) across the high-voltage intermediate circuit (110);
controlling (420) the discharge circuit (120) on the basis of the determined voltage (U_ZK),
**characterized in that**
an operating voltage range (U_B) having an upper operating voltage value (U_BO) and a lower operating voltage value (U_BU) of the high-voltage intermediate circuit (110) is predefined,
wherein the control (420) of the discharge circuit (120) comprises minimizing the current (S_E) through the discharge circuit (120) if the determined voltage (U_ZK) of the high-voltage intermediate circuit (110) is less than the upper operating voltage value (U_BO) and greater than the lower operating voltage value (U_BU) of the high-voltage intermediate circuit (110).

2. Method (400) according to Claim 1,
wherein the control (420) of the discharge circuit (120) comprises increasing the current (S_E) through the discharge circuit (120) if the determined voltage (U_ZK) of the high-voltage intermediate circuit is greater than the upper operating voltage value (U_BO) or less than the lower operating voltage value (U_BU) of the high-voltage intermediate circuit (110).

3. Method (400) according to Claim 2,
wherein the control (420) of the discharge circuit (120) comprises increasing the current (S_E) through the discharge circuit (120) in a manner inversely proportional to the falling determined voltage (U_ZK) of the high-voltage intermediate circuit (110).

4. Method (400) according to one of the preceding claims,
wherein a current limit value (S_G) of the current (S_E) through the discharge circuit (120) is predefined,
wherein the control (420) of the discharge circuit (120) comprises limiting the current (S_E) through the discharge circuit (120) if the current (S_E) through the discharge circuit (120) exceeds the current limit value (S_G).

5. Method (400) according to one of the preceding claims,
wherein a contact voltage value (U_T) of the high-voltage intermediate circuit (110) is predefined,
wherein the control (420) of the discharge circuit (120) comprises reducing the current (S_E) through the discharge circuit (120) if the determined voltage (U_ZK) is less than the contact voltage value (U_T) of the high-voltage intermediate circuit (110).

6. Computer program which is configured to carry out the method (400) according to one of Claims 1-5.

7. Machine-readable storage medium on which the computer program according to Claim 6 is stored.

8. Device (140) for discharging a high-voltage intermediate circuit (110) with a discharge circuit (120),
wherein the high-voltage intermediate circuit (110) comprises an intermediate circuit capacitor (130);
wherein the device (140) comprises means (M)
for determining a voltage (U_ZK) across the high-voltage intermediate circuit (110) and
for controlling the discharge circuit (120) on the basis of the determined voltage (U_ZK),
**characterized in that**
an operating voltage range (U_B) having an upper operating voltage value (U_BO) and a lower operating voltage value (U_BU) of the high-voltage intermediate circuit (110) is predefined,
wherein the control (420) of the discharge circuit (120) comprises minimizing the current (S_E) through the discharge circuit (120) if the determined voltage (U_ZK) of the high-voltage intermediate circuit (110) is less than the upper operating voltage value (U_BO) and greater than the lower operating voltage value (U_BU) of the high-voltage intermediate circuit (110).

9. Device (140) according to Claim 8,
wherein the discharge circuit (120) comprises a linear regulator, a switching regulator or a DC/DC converter.

10. Device (140) according to Claim 8,
wherein the discharge circuit (120) comprises a switchable load, in particular a load resistor.

11. Drive train (200) having a device (140) according to one of Claims 8 to 10.

12. Vehicle (300) having a drive train (200) according to Claim 11.

## Revendications

1. Procédé (400) servant à décharger un circuit intermédiaire haute tension (110) par un circuit de décharge (120),
le circuit intermédiaire haute tension (110) comprenant un condensateur de circuit intermédiaire (130) ;
comprenant les étapes consistant à :
déterminer (410) la tension (U_ZK) au circuit intermédiaire haute tension (110) ;
piloter (420) le circuit de décharge (120) en fonction de la tension déterminée (U_ZK),
**caractérisé en ce qu'**une plage de tension de service (U_B) avec une valeur de tension de service supérieure (U_BO) et une valeur de tension de service inférieure (U_BU) du circuit intermédiaire haute tension (110) est prédéfinie,
le pilotage (420) du circuit de décharge (120) comprenant une minimisation du courant (S_E) à travers le circuit de décharge (120) si la tension déterminée (U_ZK) du circuit intermédiaire haute tension (110) est inférieure à la valeur de tension de service supérieure (U_BO) et supérieure à la valeur de tension de service inférieure (U_BU) du circuit intermédiaire haute tension (110) .

2. Procédé (400) selon la revendication 1, dans lequel le pilotage (420) du circuit de décharge (120) comprend une augmentation du courant (S_E) à travers le circuit de décharge (120) si la tension déterminée (U_ZK) du circuit intermédiaire haute tension est supérieure à la valeur de tension de service supérieure (U_BO) ou inférieure à la valeur de tension de service inférieure (U_BU) du circuit intermédiaire haute tension (110).

3. Procédé (400) selon la revendication 2, dans lequel le pilotage (420) du circuit de décharge (120) comprend une augmentation du courant (S_E) à travers le circuit de décharge (120) de façon inversement proportionnelle à la tension déterminée en baisse (U_ZK) du circuit intermédiaire haute tension (110).

4. Procédé (400) selon l'une quelconque des revendications précédentes,
une valeur limite de courant (S_G) du courant (S_E) étant prédéfinie par le circuit de décharge (120),
le pilotage (420) du circuit de décharge (120) comprenant une limitation du courant (S_E) par le circuit de décharge (120) si le courant (S_E) à travers le circuit de décharge (120) dépasse la valeur limite de courant (S_G).

5. Procédé (400) selon l'une quelconque des revendications précédentes,
une valeur de tension de contact (U_T) du circuit intermédiaire haute tension (110) étant prédéfinie,
le pilotage (420) du circuit de décharge (120) comprenant une réduction du courant (S_E) à travers le circuit de décharge (120) si la tension déterminée (U_ZK) est inférieure à la valeur de tension de contact (U_T) du circuit intermédiaire haute tension (110).

6. Programme informatique qui est aménagé pour exécuter un procédé (400) selon l'une quelconque des revendications 1 à 5.

7. Support de stockage lisible par machine, sur lequel est stocké le programme informatique selon la revendication 6.

8. Dispositif (140) servant à décharger un circuit intermédiaire haute tension (110) par un circuit de décharge (120),
le circuit intermédiaire haute tension (110) comprenant un condensateur de circuit intermédiaire (130) ;
le dispositif (140) comprenant des moyens (M) pour déterminer une tension (U ZK) au niveau du circuit intermédiaire haute tension (110), et pour piloter le circuit de décharge (120) en fonction de la tension déterminée (U_ZK),
**caractérisé en ce qu'**une plage de tension de service (U_B) avec une valeur de tension de service supérieure (U_BO) et une valeur de tension de service inférieure (U_BU) du circuit intermédiaire haute tension (110) est prédéfinie,
le pilotage (420) du circuit de décharge (120) comprenant une minimisation du courant (S_E) à travers le circuit de décharge (120) si la tension déterminée (U_ZK) du circuit intermédiaire haute tension (110) est inférieure à la valeur de tension de service supérieure (U_BO) et supérieure à la valeur de tension de service inférieure (U_BU) du circuit intermédiaire haute tension (110) .

9. Dispositif (140) selon la revendication 8, dans lequel le circuit de décharge (120) comprend un régulateur linéaire, un régulateur de commutation ou un convertisseur CC/CC.

10. Dispositif (140) selon la revendication 8, dans lequel le circuit de décharge (120) comprend un consommateur commutable, en particulier une résistance de charge.

11. Chaîne cinématique (200) comprenant un dispositif (140) selon l'une quelconque des revendications 8 à 10.

12. Véhicule (300) comprenant une chaîne cinématique (200) selon la revendication 11.
